# EUROPEAN PATENT APPLICATION

(11) **EP 2 865 746 A1**
(43) Date of publication of application: **29.04.2015**
(21) Application number: 13190555.6
(22) Date of filing: 28.10.2013
(51) Int. Cl.: C12C 3/08, C12C 3/10

(54) **Fractionation of hop oils using liquid and supercritical carbon dioxide.**

(71) Applicant: Marriott, Raymond, Kettering Northamptonshire NN16 8TZ (GB)
(72) Inventor: Marriott, Raymond, Kettering Northamptonshire NN16 8TZ (GB)
(74) Representative: Roufosse, Micheline C.

(57) **Abstract**

This invention discloses a method for producing of hop aroma from hop oil that uses only carbon dioxide and ethanol as solvents. It also covers 'green' aromas produced by that method and the beers produced using these 'green' aromas.

## Description

### Field of the invention.

This invention discloses a method for producing of hop aroma from hop oil that uses only carbon dioxide and ethanol as solvents. It also covers 'green' aromas produced by that method and the beers produced using these 'green' aromas.

### Brief description of the prior art.

Hops provide both bitterness and aroma for brewed products as well as soft drinks and other foods. In the last 20 years there has been an increasing trend to separate the aroma fraction from the bitterness so that products can be formulated by independent addition of aroma or bitterness products. This has also resulted in increased use of products that can be added post-fermentation to allow product differentiation from a high gravity brewing line.

Hop oils were the first products to be used to provide independent aroma addition and these were originally prepared by steam distillation of fresh hops. Hop oil No 1 i s one of the original Pauls and Whites hop oil products. Hop oil was mostly used to impart 'dry hop" character and was added to casks or conditioning tanks via a dropper bottle. Later hop oils were prepared as emulsions using either gums or polysorbates as emulsifiers to simplify the addition of the oils and to aid dispersion as disclosed for example in Moir (Moir M.; in Journal of the American Society of Brewing Chemists 58, 4, 131, 2000)

A number of soluble hop aromas were developed by BRI in 1980: they concluded that a "Spicy" fraction and a "Floral" fraction were capable of delivering almost all hoppy character when used in varying combinations, as described for example in Murray et al. (Murray J.P., Westwood K., and Daoud I. in Proceedings of the European Brewery Convention. IRL Press, Oxford University Press, U.K., 321,m1987). A citrussy fraction and an ester fraction were then added by English Hop Pproducts Ltd as disclosed by Marriott et al. (Marriott R.J., Gardner D.S.J., Fincher M., Kemp T. in Proceedings of the 25th Convention of the Institute of brewing-Asia pacific Section, 1998, 199).

A wider range of soluble hop aromas was recently produced by Botanix Ltd and Kalsec which include·specific aroma fractions and soluble hop topnotes produced from specific hop varieties. These are all soluble products designed to be added to bright beer post fermentation and offer the greatest flexibility for brewers.

These products are all derived from hops and start with extracts but use a range of solvent processes to achieve firstly separation of the terpene hydrocarbons from the oxygenated fraction and subsequently fractionation of the oxygenated fraction to produce distinct aroma characteristics. Of these fractions the floral and spicy fractions are the most widely used.

A wide range of natural flavour preparations is already available, including essential oils, herb and spice extracts, flavour molecules fractionated from essential oils or botanical extracts and natural flavour molecules produced by fermentation. The technologies used to produce these traditional products are well established but use methods that are often energy intensive or solvents that are produced from fossil fuels and need to be tightly controlled with respect to residual levels. The largest volumes of extracts used for food flavouring is herb and spice oleoresins. These are mostly extracted at source using a range of organic solvents such as hexane and acetone. Current EU legislation defines both permitted extraction solvents for flavouring preparations and their maximum residue levels in foodstuff. Additional restrictions are prescribed by the organic certification bodies: none of these have been harmonised.

Organic certification only allows water, carbon dioxide and ethanol as they are safe solvents and only use renewable feedstock. In addition, they have the widest acceptability. Both liquid carbon dioxide and supercritical carbon dioxide have been used as process solvents. Supercritical carbon dioxide is also known as an extraction solvent in the food industry. It has however not been used extensively because of its high installation cost, high operating cost, and requirement for technically skilled operators.

Processes that either reduce or eliminate the use of volatile organic compounds (VOC) can be described as "green" and in that sense, the use of supercritical carbon dioxide in extraction science is considered as 'green' as it acts both in reducing and replacing VOCs.

Hop oil is presently produced using green techniques, but there is still a need to provide green techniques for the subsequent fractionation process.

### Summary of the invention.

It is an objective of the present invention to fractionate hop oil using a strictly 'green' process.

It is another objective of the present invention to use carbon dioxide both as liquid and as supercritical carbon dioxide as solvent in the fractionation of hop oil.

It is also an objective of the present invention to prepare flavours completely free of solvent residues.

It is yet another objective of the present invention to produce beers using 'green' and solvent free flavours.

The foregoing objectives have been realised as described in the independent claims. Preferred embodiments are described in the dependent claims.

### Brief description of figures.

Figure 1 represents a typical separation profile representing the pressure expressed in bars as a function of time expressed in hours. The temperature is indicated along the lines.
Figure 2 represents the chromatograms of several starting hop oils
Figure 3 represents the yield expressed in g for various fractions for Target hop oil (SD) with a separation carried out at room temperature with alumina support.
Figure 4 shows the chromatograms of liquid CO₂ fractions 1, 5 and 10 for target hop oil (SD) at room temperature on alumina support.
Figure 5 represents FT-IR analysis for selected fractions of target hop oil (SD) at room temperature on alumina support.
Figure 6 represents the yield expressed in grams as a function of liquid CO₂ used expressed in grams for 3 different starting hop oils.
Figure 7 represents the yield expressed in grams for various fractions for Target hop oil (SD) with a separation carried out at a temperature of 10 °C with alumina support.
Figure 8 represents the chromatograms of liquid CO₂ fractions 1, 4 and 7 for target hop oil (SD), on alumina support and at a temperature of 10 °C.
Figure 9 represents the yield expressed in grams for various fractions for Target hop oil (SD) with a separation carried out at room temperature with neutral alumina support.
Figure 10 represents the chromatograms of liquid CO₂ fractions 1, 6 and 12 for target hop oil SD at room temperature on neutral alumina support.
Figure 11 represents the yield expressed in grams for various fractions for Target hop oil (SD) with a separation carried out at room temperature with acidic alumina support.
Figure 12 represents the chromatograms of liquid CO₂ fractions 1, 6 and 13 for target hop oil SD at room temperature on acidic alumina support.
Figure 13 represents the yield expressed in grams for various fractions for Target hop oil (SD) with a separation carried out at room temperature with silica support.
Figure 14 represents the chromatograms of liquid CO₂ fractions 2, 8 and 15 for target hop oil SD at room temperature on silica support.
Figure 15 represents the yield expressed in grams for various fractions for Target hop oil (MD) with a separation carried out at room temperature with basic alumina support.
Figure 16 the yield expressed in grams for various fractions for Cascade hop oil (SD) with a separation carried out at room temperature with basic alumina support.

### Detailed description of the invention.

Accordingly, the present invention discloses a method for extracting two or more fractions from hop oil, said method comprising the steps of:
a) providing an inert adsorbing support;
b) loading the hop oil onto the support of step a) at a loading rate ranging between 1 and 30 mass%;
c) separating a first fraction with liquid carbon dioxide at a first temperature ranging between 0 °C and 30 °C and a first pressure ranging between 40 bars and 72.8 bars and a first flow rate ranging between 1 g and 400g/kg supported material/min until complete or partial separation is achieved;
d) separating a second fraction with supercritical carbon dioxide at a second temperature ranging between 31 °C and 80 °C and a second pressure of at least 72.8 bars and a second flow rate ranging between 1 g and 400g/kg supported material/min until complete or partial separation is achieved;
e) optionally, continuing the separation process with supercritical carbon dioxide at another set of temperature and pressure until all desired fractions are separated;
f) separating a further fraction as in step d) or e) if it was partially separated, and/or a new fraction with supercritical carbon dioxide at a temperature of at least 31 °C and a pressure of at least 72.8 bars and a flow rate ranging between 1 g and 400g/kg supported material/min using a co-solvent at a level ranging between 0.05 vol% and 100vol% of the CO₂ flowrate until complete or partial separation is achieved
g) optionally, continuing the separation process with supercritical carbon dioxide at another set of temperature and pressure and co-solvent until all desired fractions are separated;
h) soaking the support resulting from step f) or of step g) in a 'green' solvent;
i) decanting or filtering the 'green' solvent from the support and subsequently evaporating or distilling said solvent;
j) retrieving the remaining unseparated residues
said method being **characterised in that** the fractionation of the hop oil is achieved without going through the intermediate 10-fold hop oil stage.

The inert adsorbing supports that can be used in the present invention can be either neutral, or basic or acidic and can be selected from any support material known in the art, but they must be inert towards the components of hop oil. They can for example be glass beads, but preferably they have a large surface area and therefore are provided in a finely grinded form or in a porous form.

The support can be selected from any porous material. It is typically selected from silica, alumina, montmonrillionite, magnesium silicate, aluminium silicate, zeolite, polystyrene beads, chitosan, polysaccharides. Suitable support material can for example be selected from Celite S^{®}, Celite 110^{®}, Celite 209^{®}, Celite 281^{®}, Celite 503^{®}, Celite 512M^{®}, Celite 545^{®}, Celite 545AW^{®}, Celite 560^{®}, Celite 577F^{®}, Celite 535^{®} all produced by Celite Corp., acid Alumina (Alumina A), basic Alumina (Alumina B), neutral Alumina (Alumina N), Ascarite^{®} and Florisil^{®} both produced by Sigma-Aldrich, Bentonite, Kaolinite, Fuller's Earth, produced by Sigma-Aldrich.

Preferably the porous support material has the following typical properties;
- pores having a diameter ranging from 7.5 to 30 nm;
- porosity ranging from 1 to 4 cm³ /g;
- specific surface area is not particularly limited, it typically ranges between 5 to 250 m²/g; and
- an average particle diameter ranging from 1 to 150 µm.

The nature of the support has an influence on the binding strength between support and adsorbed material. It can be complex such as celite or bentonite and have little binding strength. Alternatively it can be an acidic or neutral or basic alumina and offer strong binding. The support is thus selected or tailored according to the desired level of separation or according to the nature of the material to be separated. It is observed for example, that moving from neutral to acidic alumina support results in a shift in fraction distribution towards more polar fractions and greater support interaction.

The starting hop oil material is obtained from commercial suppliers. As they vary in flavour content, they need to be profiled. The hydrocarbons, esters, ketones and alcohols are known to vary from one hop oil to another according to the hop variety selected. The principle hop oil components are terpene hydrocarbons particularly myrcene, humulene and caryophyllene.

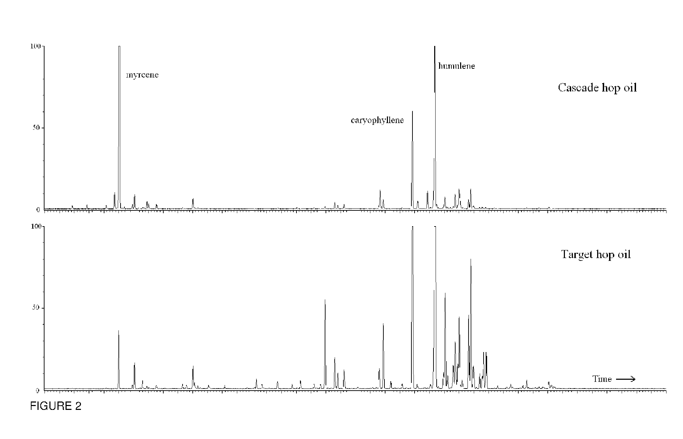

Figure 2 represents the chromatograms of several starting hop oils.

The support is loaded with hop oil at a loading rate ranging between 1 and 30 mass%, preferably between 5 and 20 mass%.

The liquid carbon dioxide used in the first separation is preferably used at a temperature ranging between 3 °C and 7 °C, at a pressure ranging between 60 and 70 bars with a preferred flow rate of 1 g and 400g/kg supported material/min and a period of time ranging between 45 minutes and 1 hour.

For the subsequent separations using carbon dioxide, the temperature and pressure are selected to separate the desired aroma, using increasingly polar conditions.

The liquid CO₂ fraction however varies in behaviour depending upon the proportion of mono- and sesquiterpene hydrocarbons in the starting hop oil.

Above the supercritical point, the temperature and pressure are selected and adjusted to fractionate a wide range of molecules.

The supercritical carbon dioxide can further include a percentage of co-solvent, preferably selected from ethanol. This leads to distinctdifferent separation products. The percentage of added co-solvent ranges between 0.05 and 100 vol %, preferably between 0.05 and 100 vol %, and more preferably between 1 and 20 vol%.

Another advantage of using supercritical carbon dioxide as fractionation and extraction solvent is that it can be easily removed because of its 'zero' surface tension, thereby producing solvent-free products.

The 'green' solvents are selected from water, ethanol and carbon dioxide.

The present invention also discloses the flavour products obtained by the method of the present invention. Because the present flavour products have been obtained without solvents they do not suffer the disadvantage of containing traces of solvents.

The present invention further covers the beer products prepared with the flavour products of the present invention. In addition to being fully 'green', they have a distinct 'clean' flavour.

### Examples.

Hop oils (Target SD, Target MD, Cascade SD, AOE Stage 1 (MD) and AOE Stage 2 (MD) were provided by TNS Ltd. Neutral alumina, acidic alumina and silica were obtained from Sigma-Aldrich and liquid CO₂ was obtained from BOC. The ethanol used was fermentation grade absolute ethanol obtained from Fisher.

Extraction trials were carried out on a Thar SFC-1000 extraction rig, an initial extraction was carried out using a 100ml extractor but all subsequent trials were made using a 1000ml extractor to improve fraction yield and accuracy.

The support was prepared as follows: 900g mineral support were weighted into a 2000ml rotary evaporator flask, 100g hop oil were added in 10g portions, rotating the flask in between additions to completely disperse the oil and the flask was rotated slowly until a free flowing powder was obtained.

Extraction was then carried out as follows: the chillers were set at a temperature of 0°C for the CO₂ pump and at a temperature of +5°C for the cold trap. 1 kg of the supported hop oil was loaded into the 1000ml extractor, the powder was fluidised using a long spatula to compact the charge and all powder was removed from the inner rim and threads before closing the extractor. The cylinder inlet pressure was set to 50-52bar using manual back pressure regulator (BPR) on CO₂ inlet line, the inline heater and extractor 1 were switched off and the separator was heated to 35°C

The first extraction was carried out with liquid CO₂ at room temperature (25 °C) and 70bar with a flow rate of 15g/min. Once pressure had been reached, the separator was adjusted to 15bar back pressure and samples were collected every 15 minute, until the 15 min fraction weight was below 1 g. When the last sample was collected, the cold trap was drained. After completion, The CO₂ pump was switched off, the separator back pressure was released and the separator and cold trap were washed with industrial methylated spirits (IMS), washings were discarded. The lid was refitted and tightened after thorough drying

In the subsequent extraction using Supercritical CO₂, the automated back pressure regulator (ABPR) was set to 400 bar and the extractor temperature was increased to 50°C. Once temperature was reached, CO₂ was turned on at a flow rate of 15g/minute and once the pressure had been reached the separator was adjusted to 15bar back pressure and the separator fraction was collected after 60 minutes. When complete the CO₂ pump was switched off, the back pressure was released and the separator washed out with IMS. The washings were discarded, trap volatiles were collected in a separate vial, then the trap was opened and washed out with IMS and the washings were discarded. The trap and separator were reassembled.

The next extraction was carried out with supercritical CO₂ with ethanol as co-solvent. The co-solvent pump was primed, then the valve was slowly opened to allow pressure to equilibrate with scCO₂ flow. ABPR setting was slowly reduced to 300 bar and the extractor temperature decreased to 40°C. Once temperature had been reached, CO₂ flow was turned on at a flow rate of 18g/minute and once pressure had been reached, the separator was adjusted to 15bar back pressure and the co-solvent pump was opened at a flow rate of 2g/minute ethanol corresponding to 10 vol%. The samples were collected every hour for 3 hours but the separator and trap were drained every 30 minutes into the same flask. After 3 hours the co-solvent pump was turned off but the CO₂ pump was run for another 30 minutes adding this to the last fraction.

At the end of the operation the plant was thoroughly cleaned as follows: the plant was depressurised and all heaters turned off. The contents of extractor were emptied into a plastic beaker and the extractor was cleaned with a vacuum cleaner. The trap and separator were cleaned with IMS, and allowed to dry. The plant was then reassembled.

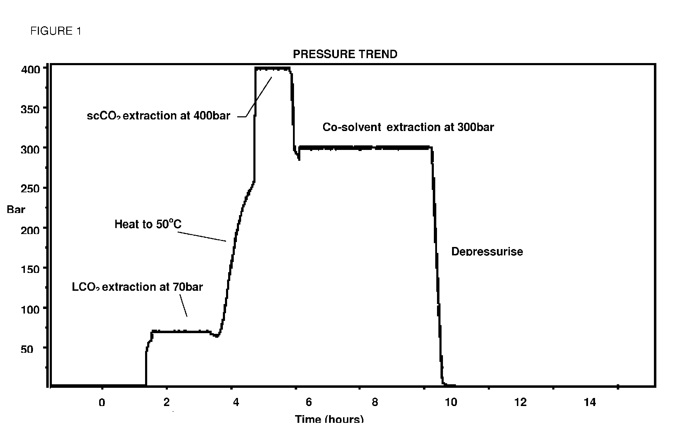

A typical extraction profile can be seen in Figure 1 wherein it can be seen that each fraction peak elutes over a given time period.

Identification of the compounds was based on calculated Kovats retention index, comparison with library mass spectra (NIST and Adams) and comparison with standard components. The use of a VF-5 (equivalent to DB-5 or HP-5) column allowed more accurate correlation with the extensive Adams database. Infrared spectra were also obtained on all the liquid CO₂ and supercritical CO₂ fractions using a Nicolet 8700 FT-IR fitted with a diamond cell. Scans were averaged from thirty two scans.

### Example 1.

The trials were carried out with Target hop oil (SD) at room temperature with alumina support supplied by TNS. This is a heat activated basic alumina supplied by Rockwood.

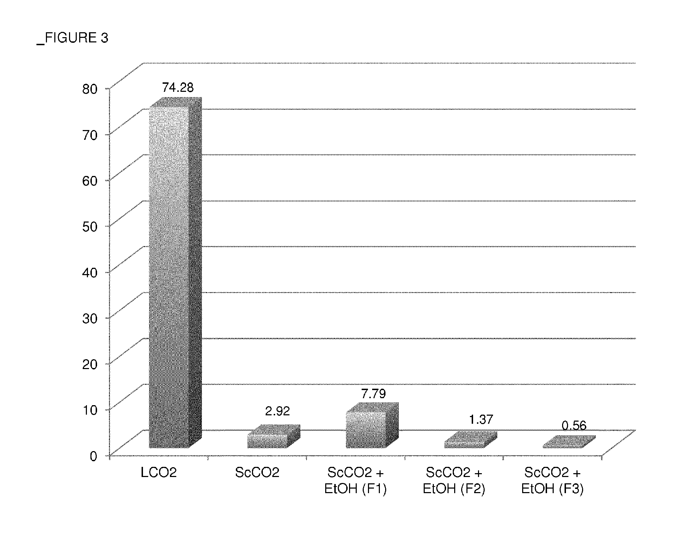

The separated fractions are shown in Figure 3 and the separated flavours are described here below.

### Liquid carbon dioxide separation.

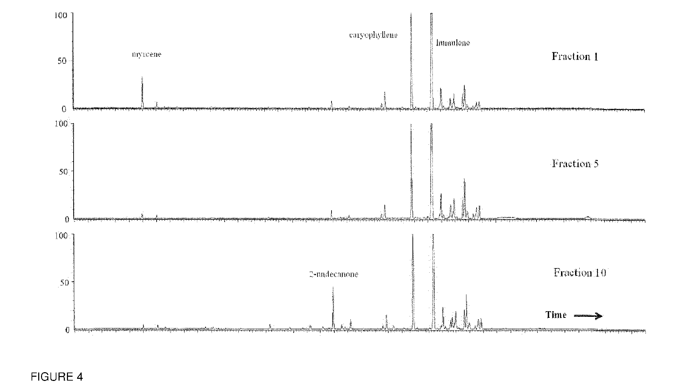

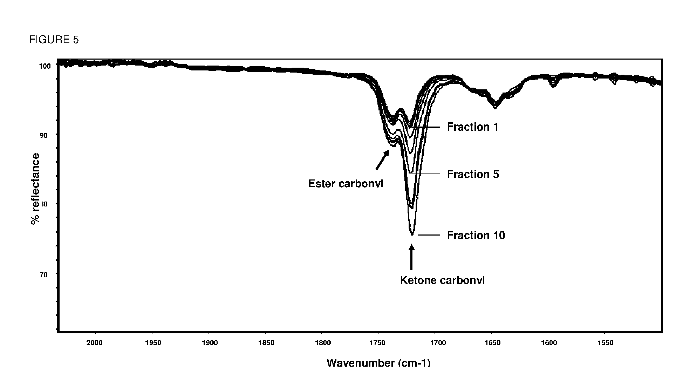

Figure 4 shows the chromatograms of the first, middle and last liquid CO₂ fractions and it shows that towards the end of the liquid carbon dioxide extraction, 2-undecanone was beginning to be eluted. This trend is confirmed by the FT-IR analysis represented in Figure 5, which shows an increasing carbonyl stretch at 1725cm⁻¹ from the ketones against a decreasing ester carbonyl stretch at 1740cm⁻¹. The liquid CO₂ fraction varies in behaviour depending on the proportion of mono and sesquiterpene hydrocarbons in the oil with variable amounts being recovered in the separator or in the cold trap.

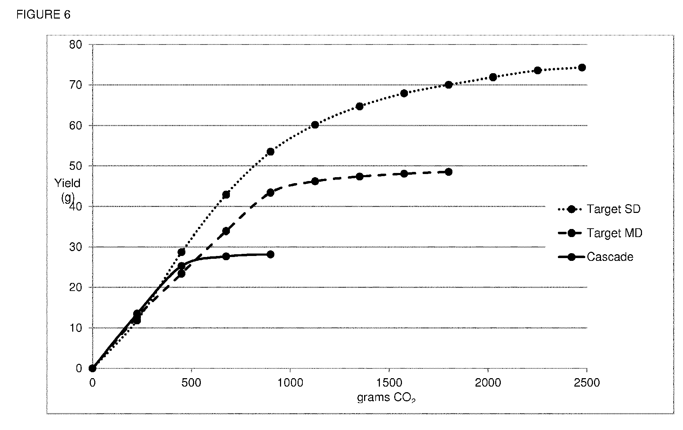

Figure 6, which represents a graph of yield as a function of amount of CO₂ for various starting hop oils, clearly shows that every oil must be processed for a different time according to its composition.

### Supercritical carbon dioxide separation.

The supercritical CO₂ fraction is mainly composed of ketones with some residual caryophyllene and humulene and the FT-IR spectra shows this to have an almost pure ketone carbonyl stretch. This fraction appears to have the organoleptic characteristics of a floral fraction.

### Supercritical carbon dioxide with 10 vol% ethanol separation.

The supercritical CO₂ fractions with 10% ethanol added were distinctly different. The first and second fractions were mainly composed of linalol and 2-humulenol with some 2-undecanone and had a distinct hop spicy character. The third fraction contained much higher levels of free fatty acids and had a noticeable acidic aroma.

### Example 2.

The same separation scheme as that of example 1 was repeated using a lower temperature of 10 °C instead of room temperature.

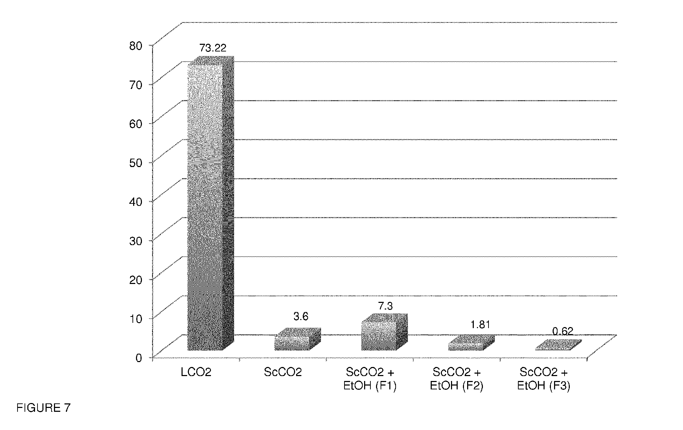

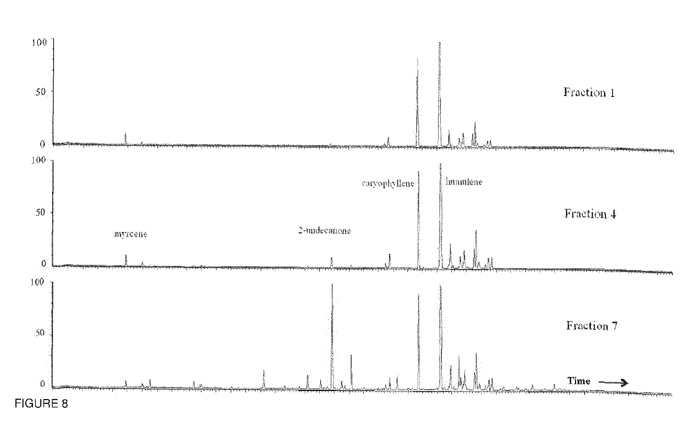

The fraction yields were almost identical to those of example 1 but the scCO₂ fraction was higher as can be seen in Figure 7. The chromatograms of each fraction showed that the distribution of the ketones was significantly changed as seen for example in Figure 8. There was less 2-undecanone in the liquid CO₂ fractions and the scCO₂ fraction was much richer in ketones with less humulene and caryophyllene. The scCO₂ fractions + ethanol were similar to those obtained at room temperature but less fatty acids were extracted. Without wishing to be bound by a theory, it is assumed that the CO₂ is behaving as a less polar solvent at lower temperatures and it might thus be preferable to carry out the separation at 10°C.

The scCO₂ + ethanol fractions from both Target hop oil trials had an overall spicy character but when aired off on a smelling strip a noticeable citrussy character emerges.

### Example 3.

Examples 1 and 2 were all carried out using the alumina supplied by TNS. This is a heat activated basic alumina supplied by Rockwood. In this example, the support was neutral alumina supplied by Sigma-Aldrich and with a particle size distribution almost identical to that of the Rockwood alumina.

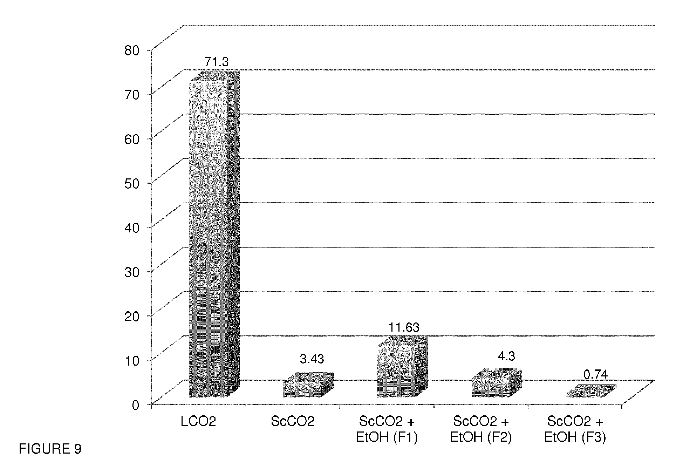

The use of this support produced fractions with slightly higher scCO₂ and scCO₂ + ethanol yields than those of examples 1 and 2 as can be seen in Figure 9. It may be associated with a greater retention of the support.

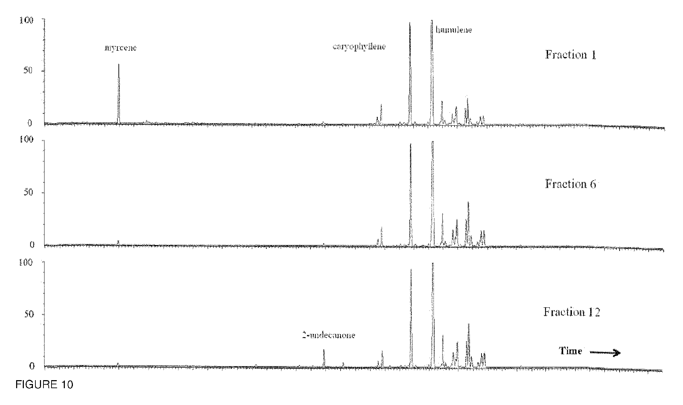

The chromatograms showed that the liquid CO₂ was removing much less 2-undecanone even in the later fractions, as seen for example in Figure 10. Increasing the pressure to supercritical CO₂ started to remove the 2-undecanone but this fraction still contained high levels of sesquiterpene hydrocarbons. The further addition of ethanol still gave fractions that were rich in 2-undecanone with the linalol being retained on the support.

### Example 4.

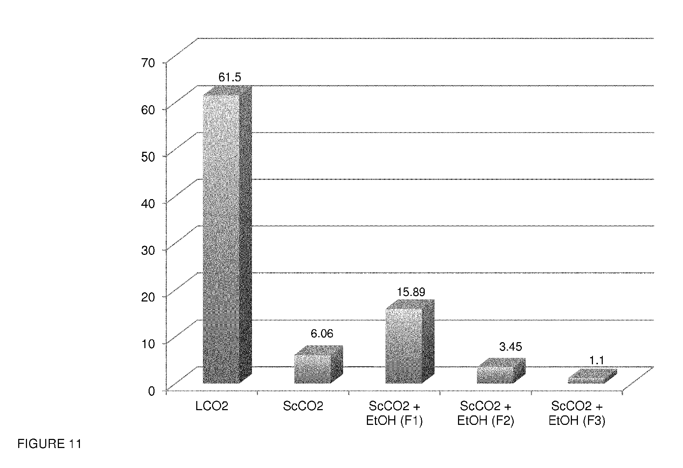

The neutral alumina support was replaced by acidic alumina. This resulted in a further shift in fraction distribution towards more polar fractions and greater support interaction as seen in Figure 11.

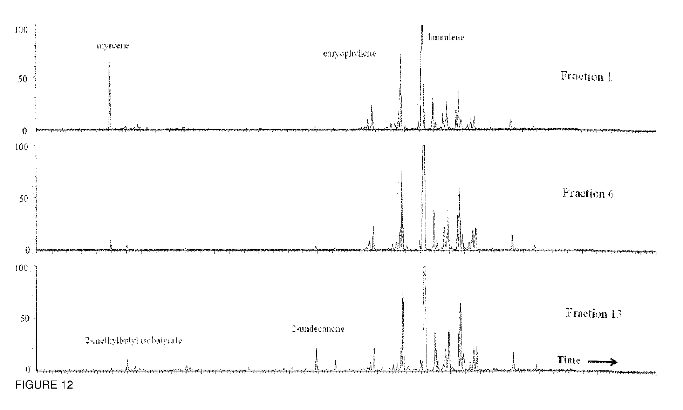

The chromatograms showed that the liquid CO₂ was removing almost no 2-undecanone even in the later fractions. Increasing the pressure to supercritical CO₂ started to remove the ketones but this fraction still contained high levels of sesquiterpene hydrocarbons as seen for example in Figure 12. The addition of ethanol gave fractions that were still rich in 2-undecanone with the linalol being almost completely retained on the support.

### Example 5.

Silica support was used in this series of trials. This support appears to be behaving as a highly acidic material but is actually a neutral material having a pH of 6.7 in a 10% solution.

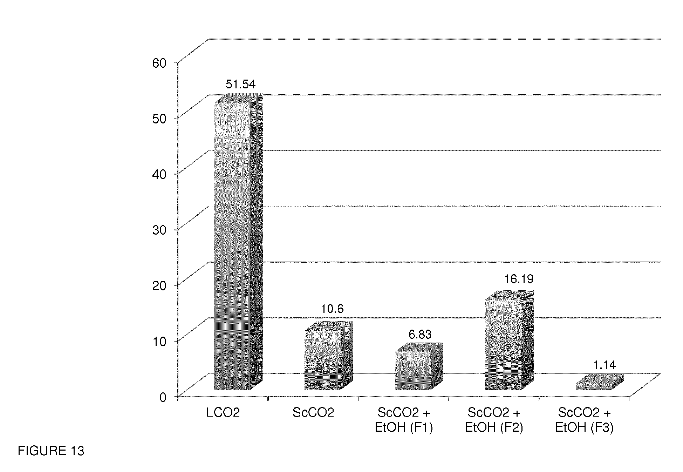

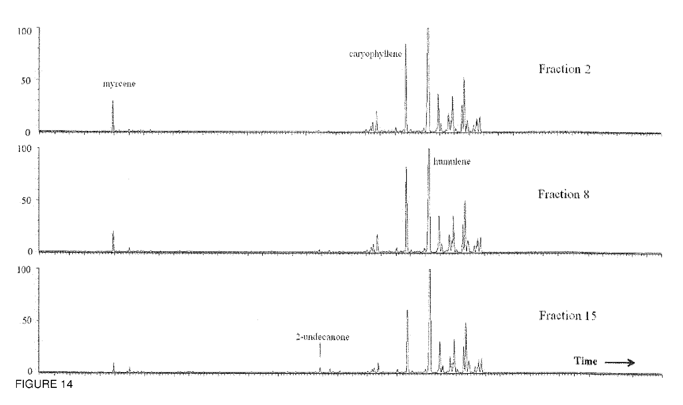

In this trial there was a further shift toward more polar fractions with greater yields both with scCO₂ and scCO₂ + ethanol particularly in the second co-solvent fraction as seen in Figure 13. The chromatograms showed that both the liquid CO₂ and scCO₂ were removing almost no 2-undecanone as seen for example in Figure 14. With the addition of the ethanol, a significant level of ketones was removed only after the second fraction and the linalol was almost completely retained on the support.

### Example 6.

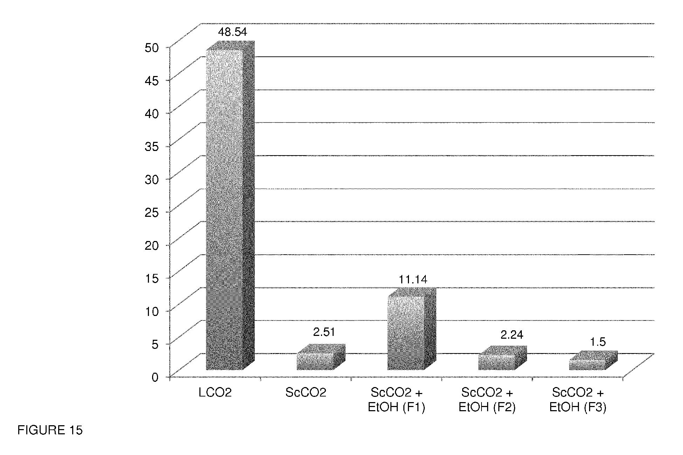

This trial was carried out using heat treated basic alumina (Rockwood) using Target hop oil (MD). It behaved in a similar way to Target hop oil (SD) but had an overall lower yield as can be seen in Figure 15.

The chromatograms of the first, middle and last liquid CO₂ fractions indicated that towards the end of the liquid CO₂ extraction, 2-undecanone and 2-tridecanone were becoming the predominant components. The supercritical CO₂ fraction was mainly composed of ketones but linalool was also present. The supercritical CO₂ fraction with 10% ethanol added was collected as three one-hour fractions. These were distinctly different: the first fraction was mainly composed of linalol and 2-humulenol but both the second and third fractions had significant levels of fatty acids. It is believed that the separation could be improved by running this oil at a lower temperature as was observed in the Target hop oil (SD) of example 2.

### Example 7.

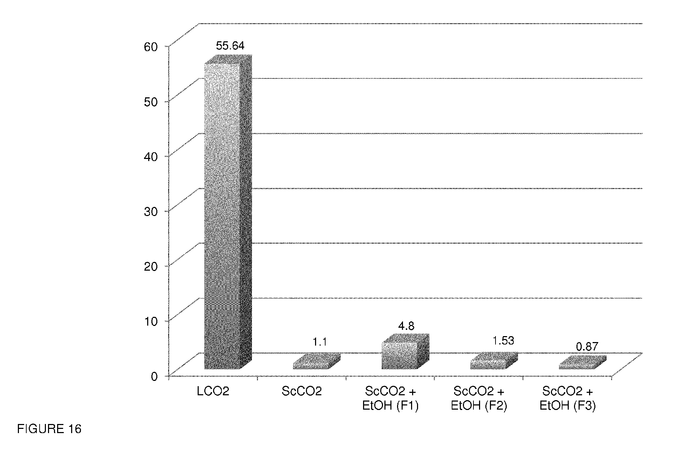

Cascade hop oil (SD) was used in this trial. It also appears to have a significant amount of polymerised material as the overall yield was only 63% of the starting weight. The fraction distribution also showed low yields of both the scCO₂ and scCO₂ + ethanol fractions as can be seen in Figure 16. They had however very intense aroma.

The chromatograms for the Cascade fractions showed that the liquid CO₂ fractions comprised almost entirely hydrocarbons. The supercritical CO₂ fraction had an intense rose/floral aroma probably attributed to the high level of methyl geranate. The scCO₂ + ethanol fractions were predominantly linalool and geraniol and again had an intense floral aroma. The last scCO₂ + ethanol fraction had high levels of fatty acids including geranic acid and was therefore a potential precursor fraction to produce more methyl geranate.

## Claims

1. A method for extracting two or more fractions from hop oil, said method comprising the steps of:
a) providing an inert adsorbing support;
b) loading the hop oil onto the support of step a) at a loading rate ranging between 1 and 30 mass%;
c) separating a first fraction with liquid carbon dioxide at a first temperature ranging between 0 °C and 30 °C and a first pressure ranging between 40 bars and 72.8 bars and a first flow rate ranging between 1 g and 400g/kg supported material/min until complete or partial separation is achieved;
d) separating a second fraction with supercritical carbon dioxide at a second temperature ranging between 31 °C and 80 °C and a second pressure of at least 72.8 bars, and a second flow rate ranging between 1 g and 400g/kg supported material/min until complete or partial separation is achieved;
e) optionally, continuing the separation process with supercritical carbon dioxide at another set of temperature and pressure until all desired fractions are separated;
f) separating a further fraction as in step d) or e) if it was partially separated, and/or a new fraction with supercritical carbon dioxide at a temperature of at least 31 °C and a pressure of at least 72.8 bars and a flow rate ranging between 1 g and 400g/kg supported material/min using a co-solvent at a level ranging between 0.05 vol% and 100 vol% of the CO₂ flowrate until complete or partial separation is achieved
g) optionally, continuing the separation process with supercritical carbon dioxide at another set of temperature and pressure and co-solvent until all desired fractions are separated;
h) soaking the support resulting from step f) or of step g into a 'green' solvent;
i) decanting or filtering the 'green' solvent from the support and subsequently evaporating or distilling said solvent;
j) retrieving the remaining unseparated residues

2. The method of claim 1 wherein fractionation of the hop oil is achieved without going through the intermediate 10-fold hop oil stage.

3. The method of claim 1 or claim 2 wherein the inert adsorbing supports that can be used in the present invention can be neutral, or basic or acidic.

4. The method of claim 3 wherein the support is selected from silica, alumina, montmonrillionite, magnesium silicate, aluminium silicate, zeolite, polystyrene beads, chitosan, polysaccharides.

5. The method of any one of the preceding claims wherein the loading rate of the support with hop oil ranges between 5 and 20 vol%.

6. The method of any one of the preceding claims wherein the 'green' solvent is selected from water, ethanol or carbon dioxide obtained from biological and sustainable sources

7. The method of any of the preceding claims wherein in step c) the temperature is ranging between 3°C and 7°C,and the pressure is ranging between 60 and 70 bars.

8. The method of any one of the preceding claims wherein the pressure in claim 1, step d) is of at most 700 bars

9. The method of any one of the preceding claims wherein the co-solvent in claim 1 step f) is ethanol used in an amount ranging between 1 and 20 vol%.

10. Separated flavour products obtained by the method of any one of claims 1 to 9.

11. Beer products prepared using one or more separated flavours according to claim 10.
